Europäisches Patentamt

European Patent Office

Office européen des brevets

(19)

(11) Numéro de publication: **0 265 333 B1**

# FASCICULE DE BREVET EUROPEEN

(45) Date de publication de fascicule du brevet:
10.04.91

(51) Int. Cl.⁵: **F16H  39/40**, F04C 15/04

(21) Numéro de dépôt: 87402325.2

(22) Date de dépôt: 16.10.87

(54) Différentiel hydrostatique et boîte de vitesse hydrostatique le comportant.

(30) Priorité: 16.10.86 FR 8614385

(43) Date de publication de la demande:
27.04.88 Bulletin  88/17

(45) Mention de la délivrance du brevet:
10.04.91 Bulletin  91/15

(84) Etats contractants désignés:
DE GB IT SE

(56) Documents cités:
EP-A- 0 053 544      EP-A- 0 065 607
DE-C- 816 479        FR-A- 2 578 585
GB-A- 1 142 961      US-A- 4 109 466

(73) Titulaire: COMPAGNIE DE CONSTRUCTION
MECANIQUE SULZER
28-30 Boulevard Roger Salengro
F-78202 Mantes la Jolie(FR)

Titulaire: INSTITUT NATIONAL DE RECHER-
CHE SUR LES TRANSPORTS ET LEUR SE-
CURITE
2 Avenue du Général Malleret-Joinville
F-94114 Arcueil(FR)

(72) Inventeur: Leroy, Daniel
8, rue des Fontaines Agnès
F-78520 Limay(FR)
Inventeur: Maupu, Jean-Louis
152, rue de Chevilly, Escalier G.
F-94800 Villejuif(FR)

(74) Mandataire: Rinuy, Santarelli
14, avenue de la Grande Armée
F-75017 Paris(FR)

## Description

La présente invention concerne un différentiel hydrostatique comportant deux composants hydrostatiques à palettes escamotables montés en série (le plus souvent en circuit fermé) et ménagés aux interfaces d'un corps intermédiaire avec deux autres corps, ces trois corps étant coaxiaux, mécaniquement indépendants en rotation, mais adaptés à présenter des vitesses relatives de rotation.

De manière générale un différentiel peut se définir comme un dispositif établissant une corrélation entre trois mouvements, dont l'un peut être nul.

Il peut s'agir de la répartition d'une puissance entre deux roues motrices d'un véhicule. Un différentiel hydrostatique fait intervenir les pressions du fluide qui le traverse (énergie potentielle) par opposition à une machine hydrocinétique qui tire partie de la vitesse (énergie cinétique) du fluide qui le traverse.

Un différentiel hydrostatique peut notamment être intégré dans une transmission de puissance, notamment au sein d'un véhicule automobile.

En effet, du fait des caractéristiques peu souples d'un grand nombre de moteurs thermiques ou électriques, les transmissions de puissance peuvent avoir une multitude de fonctions, à savoir, le plus souvent :

1 - transmettre de l'énergie du point de production (moteur) à (ou aux) point(s) d'utilisation (des roues par exemple).

2 - convertir le couple et la vitesse provenant du moteur en un couple et une vitesse de sortie (il s'agit d'une fonction d'adaptation d'impédance); cette fonction est la plus complexe lorsque le rapport des couples entrée/sortie doit pouvoir varier constamment, voire progressivement.

3 - répartir l'énergie entre les divers récepteurs prévus aux points d'utilisation.

4 - convertir avantageusement de l'énergie, par exemple au freinage, en vue d'une éventuelle récupération (conversion en une forme stockable d'énergie) : outre que cela conduit à des économies d'énergie, cela réduit l'usure des freins, cela écrête la puissance demandée au moteur (d'où une moindre puissance installée) et cela réduit les bruits. L'énergie ainsi récupérée peut aussi servir à l'activation d'équipements adjacents.

5 - limiter le couple résistant opposé au moteur.

On peut envisager pour chacune de ces fonctions deux solutions types : une solution mécanique ou une solution hydrostatique. Les critères de choix entre ces solutions sont très divers : coût, poids, rendement, facilité de maintenance, bruit...

Pour ce qui est du simple transfert d'énergie la solution mécanique semble optimale car elle combine, notamment, un rendement excellent pour un poids faible, une maintenance réduite, pour un coût toutefois modéré. Toutefois, surtout lorsque la géométrie du trajet selon lequel il faut transporter l'énergie est complexe, la solution hydrostatique peut être préférable malgré les problèmes nombreux propres aux canalisations (fuites, coups de bélier...).

Une solution mécanique paraît optimale pour la fonction de répartition ou de distribution d'énergie (c'est là une application classique mais non exclusive des différentiels).

Par contre une solution hydrostatique semble optimale pour les fonctions de conversion. Ainsi, pour la fonction de conversion de couple et/ou vitesse, une boîte de vitesse mécanique avec embrayage impose au moteur un travail par à-coups, avec des régimes bruyants, gourmands, ou sollicitant anormalement le moteur. Par opposition, une boîte de vitesse hydrostatique, si l'on fait intervenir des cylindrées variables, permet aisément une variation continue du rapport de couple ou de vitesse. Une solution hydrostatique apparaît de même optimale pour la fonction de récupération (il suffit de prévoir des accumulateurs hydro-pneumatiques) et pour la fonction de limitation de couple résistant (naturellement remplie).

On a déjà cherché comment remplacer effectivement une boîte de vitesse mécanique par un ensemble hydrostatique approprié jouant le rôle de variateur de vitesse, de convertisseur de couple, de limiteur de couple, de convertisseur d'énergie pour récupération, de démarreur...

On a ainsi proposé une boîte de vitesse hydrostatique à transmission directe de puissance qui abrite, dans un même carter, deux composants, machines ou unités hydrostatiques reversibles (pompe/moteur) qui se partagent un même stator et qui débitent l'un dans l'autre au travers du stator. Une telle structure ne permet pas d'utiliser les composants hydrostatiques au maximum de leur puissance ni la boîte elle-même au maximum de ses possibilités. Il y a beaucoup de paramètres à réguler (pression, débit, rapport de vitesses angulaires, l'une de ces dernières...). Une telle boîte présente un mauvais rendement dû, en particulier, aux débits importants lors des pointes de puissance.

On a ensuite proposé une boîte à dérivation de puissance hydrostatique et mécanique dans laquelle de l'énergie transite pour partie par voie mécanique et pour partie par voie hydrostatique (il s'agit par exemple d'un différential mécanique dont les deux sorties sont attelées des deux côtés d'une boîte hydrostatique du type précité). Une telle boîte cumule les avantages (et les inconvénients) d'une solution mécanique (en rendement) et d'une solution hydrostatique (en variation continue de vitesse). Sa complexité est élevé et son encombrement important; les possibilités de récupération sont difficiles à optimiser et la régulation est compliquée à maîtriser.

L'invention vise à pallier ces inconvénients et a pour objet un ensemble hydrostatique adapté à être substitué à une boîte de vitesse classique (mécanique), ayant un rendement meilleur que celui d'une boîte hydrostatique classique et une structure plus simple que celle d'une boîte à dérivation de puissance à contrôle hydrostatique, qui soit adapté a établir une prise directe réelle pratiquement sans pertes ; qui permette de préférence une variation continue du rapport de vitesses, qui puisse aisément assumer une fonction de récupération au freinage et une fonction de démarreur, et dont la commande soit simple à automatiser.

L'invention propose à cet effet une boîte de vitesse purement hydrostatique à dérivation de puissance. Or une telle boîte s'avère en fait être un cas particulier de différentiel hydrostatique. Cependant ce différentiel hydrostatique peut être substitué à un convertisseurcoupleur hydrocinétique dans une boîte automatique classique.

L'invention a pour objet, de manière très générale, un différentiel hydrostatique à palettes qui présente à la fois un rendement élevé, une structure simple et un encombrement modéré, une grande fiabilité, un coût modéré et une grande souplesse d'adaptation lui permettant d'être intégré dans une grande variété de types de montages (en boîtes de vitesse - connexion entre deux arbres - mais aussi en différentiels proprement dits - connexion entre trois arbres -, voire dans des applications où n'intervient, au moins transitoirement, qu'un seul arbre ...).

L'invention propose à cet effet un différentiel hydrostatique comportant, de même que le document DE-C-316.479, au moins trois corps coaxiaux mécaniquement indépendants en rotation dont au moins un corps rotatif intermédiaire destiné à être relié à un arbre extérieur et deux corps terminaux, et au moins deux composants hydrostatiques à palettes, disposés respectivement aux interfaces du corps rotatif intermédiaire et de l'un et l'autre des corps terminaux, et adaptés à débiter l'un dans l'autre au travers du corps rotatif intermédiaire. Toutefois, ce différentiel hydrostatique se distingue du document précité par le fait que chaque composant hydrostatique comporte des palettes coulissant axialement dans des logements de l'un des corps terminaux et appliqués axialement contre une piste annulaire de guidage globalement transversale ménagée dans le corps rotatif intermédiaire et présentant, parallèlement à l'axe de rotation, une succession annulaire d'évidements formant chambre de travail pour les palettes, ce corps rotatif intermédiaire portant les pistes sur des tranches opposées tandis que les deux corps terminaux, dans lesquels coulissent les palettes, sont disposés axialement de part et d'autre de ce corps rotatif, en étant retenus axialement contre ce corps rotatif par un carter étanche comportant deux flasques disposés axialement de part et d'autre des trois corps, dont l'un est solidaire de l'un des corps terminaux et l'autre est séparé de l'autre corps terminal par une butée rotative.

On appréciera que du fait que les palettes sont escamotées axialement, comme dans le document FR-A-2.578.585 (dans un contexte toutefois différent puisque notamment le corps central est fixe), leurs mouvements ne sont pratiquement pas perturbés par l'effet centrifuge, lequel effet n'a donc pas à être pris en compte pour le dimensionnement des organes élastiques qui pressent ces palettes contre les pistes. L'effet de centrifugation est avantageusement utilisé pour la filtration du fluide.

Selon une disposition préféree de l'invention l'un au moins des composants hydrostatiques a une cylindrée (globale) variable d'où une variation progressive du rapport de transmission. De préférence les deux composants hydrostatiques ont des cylindrées variables ; dans ce cas il y a avantageusement commande simultanee des deux cylindrées en maintenant leur somme constante : cela réduit le nombre de paramètres à commander et simplifie donc l'automatisation de la commande du différentiel hydrostatique. Il est à noter qu'un différentiel hydrostatique selon l'invention dont les cylindrées des deux composants seraient toutes deux fixes (différentiel à rapport fixe) permettrait notamment d'assurer aisément un blocage de transmission pour un coût modéré.

Selon l'invention le corps tournant central porte les deux pistes sur lesquelles sont appliquées axialement les palettes, lesquelles sont attelées en rotation à deux porte-palettes constituant lesdits corps terminaux qui sont disposés de part et d'autre du corps tournant central. Cet alignement axial des corps coaxiaux établit un bon compromis entre des encombrements modérés tant radialement qu'axialement. Les porte-palettes et le corps central sont contenus dans une enveloppe étanche solidaire en rotation de l'un des porte-palettes et comportant à l'arrière de l'autre porte-palettes une butée axiale rotative sur laquelle ce dernier prend axialement appui. Cette enveloppe reprend les efforts axiaux sur les port-palettes et supprime tout mouvement relatif en cas de synchronisme.

Selon d'autres dispositions préférées de l'invention :
- les pistes annulaires transversales comportent des secteurs pleins fixes, répartis angulairement de façon régulière et alternant angulairement avec des secteurs pleins mobiles axialement (d'où une cylindrée variable) et des zones de transition entre ces secteurs qui en alternance sont connectés à des canaux d'amenée ou d'évacuation de fluide,

- ces zones de transition sont avantageusement des cavités bordées radialement de rampes de transition ce qui permet que, lors de leur coulissement axial, les palettes soient soumises sur toutes leurs faces à des pressions égales tandis que, lorsqu'elles sont soumises à des différences de pression, elles soient en appui sur les secteurs pleins fixes ou mobiles,

- chaque secteur plein et une zone adjacente de transition s'étendent angulairement sur un multiple de la période angulaire selon laquelle les palettes sont réparties angulairement grâce à quoi on obtient un synchronisme entre les arrivées (ou départs) de palettes sur les secteurs pleins fixes et mobiles,

- au moins un secteur plein mobile de l'une des deux pistes annulaires transversales ménagées sur le corps tournant central est solidaire d'un secteur plein mobile de l'autre piste ; ces secteurs sont de préférence en regard l'un de l'autre et ménagés sur deux tranches opposées d'un barreau mobile axialement : cela assure de façon très simple une corrélation entre les cylindrées variables des deux composants hydrostatiques (somme constante) et se prête aisément à une commande automatisée.

- ces barreaux mobiles axialement sont servocommandés en translation axiale par un vérin rotatif annulaire équilibré à corps mobile et à double effet coopérant avec une liaison vis-écrou, avec intervention d'un tiroir de distribution hélicoïdal à mouvement linéaire dans l'axe du différentiel, actionné et alimenté en pression par une tige et lié en rotation avec le corps central.

L'invention propose également une boîte hydrostatique de vitesse à dérivation de puissance formée d'un différentiel hydrostatique du type précité.

Selon un premier montage l'un des porte-palettes est sur une roue libre (avantageusement adaptée à être freinée en rotation par un frein multidisque) tandis que le deuxième porte-palettes est lié à un arbre d'entrée et le corps central est lié à un arbre de sortie.

Selon un autre montage l'un des porte-palettes est fixe, l'autre est lié à la sortie et le corps central est lié à l'entrée.

Selon diverses dispositions complémentaires :

- des secteurs pleins mobiles appartenant aux deux pistes sont adaptés, au freinage, à être soumis à une pression d'écartement axial. Il s'agit par exemple d'un barreau mobile du type précité, mais en deux morceaux axialement dissociables dont l'un est maintenu en position de cylindrée nulle; un second vérin est prévu pour cette dissociation.

- au moins un accumulateur est prévu sur le circuit hydraulique qui relie les deux composants hydrostatiques.

- un embrayage est prévu entre les corps respectivement reliés à l'entrée et la sortie (le corps central et l'un des porte-palettes).

On connaît déjà d'après le brevet US-4.109.466 du 29 Août 1978 une boîte hydrostatique de vitesse comportant trois corps coaxiaux mécaniquement indépendants en rotation, mais reliés par deux composants hydrostatiques à palettes (adaptés à fonctionner en pompe ou moteur); un corps central y est relié à un arbre de sortie tandis qu'un des deux corps coopérant avec le corps central est relié à un arbre d'entrée. Mais les palettes y coulissent radialement, ce qui pose des problèmes de dimensionnement des organes élastiques associés du fait de la centrifugation qui, par essence, est variable, et rend difficile un démarrage sous charge. De plus ces palettes travaillent en même temps qu'elles coulissent radialement, ce qui provoque des frottements et est nuisible à un contact étanche contre les pistes cylindriques de guidage associées. Les variations de cylindrée (qui affectent obligatoirement les deux composants hydrostatiques) s'y obtiennent par le moyen de cames déformables à ovalisation variable ou au moyen de cames cylindriques excentriques : il en résulte des problèmes d'équilibrage dynamique et cela limite les efforts auxquels peuvent être soumis ces cames. Le corps fixe n'est pas conçu pour être sur roue libre.

On appréciera qu'un différentiel hydrostatique peut bien sûr être utilisé comme un vrai différentiel, les deux porte-palettes étant chacun liés à un arbre de sortie (essieux avant et arrière dans un véhicule à 4 roues motrices, chenilles gauche et droite d'un char, hélices babord et tribord d'un bateau...).

Des objets, caractéristiques et avantages de l'invention ressortent de la description qui suit, donnée à titre d'exemple non limitatif, en regard des dessins annexés sur lesquels :

- la figure 1 est une demie-vue en coupe axiale selon la ligne I-I de la figure 7 d'un différentiel hydrostatique selon l'invention monté en boîte de vitesse;

- la figure 2 est une vue en perspective d'une palette du type représenté à la figure 1;

- la figure 3 est une vue en coupe transversale de l'arbre de distribution de fluide du différentiel de la figure 1, composée de 4 quarts correspondant à des quarts de coupe transversale dans les plans, I, II, III et IV de la figure 1;

- la figure 4 est une vue en coupe transversale du différentiel de la figure 1 (sans son capot), composée de 4 quarts correspondant à des quarts de coupe transversale dans les plans V, VI, VII, VIII de la figure 1;
- la figure 5 est une demie-vue en coupe axiale du corps central de ce différentiel dans le plan IX de la figure 4;
- la figure 6 en est une variante de réalisation avec entrée et sortie en ligne;
- la figure 7 est une vue partielle en coupe cylindrique développée du différentiel de la figure 1;
- la figure 8 est une vue montrant les zone de haute et basse pression dans la coupe de la figure 7;
- la figure 9 est une demie-vue partielle en coupe axiale, représentant une variant de la figure 1 comportant un barrau mobile en deux tronçons dissociables axialement et un module supplémentaire au sein du corps central;
- la figure 10 est une demievue en coupe axiale de ce module supplémentaire, dans un plan de coupe analogue à celui de la figure 5; et
- la figure 11 est une demie-vue en coupe axiale d'une variante de module supplémentaire adapté à être intégré dans la figure 6.

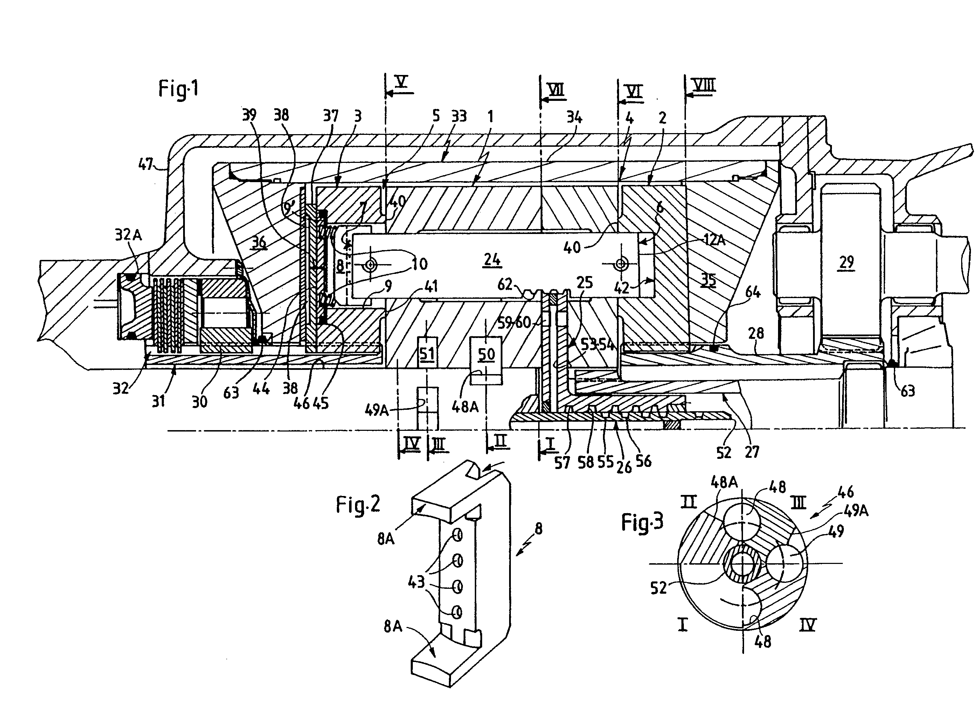

Les figures 1 à 4 et 6 à 8 représentent, à titre d'exemple de réalisation d'un différentiel hydrostatique selon l'invention, une boîte de vitesse pour véhicule léger avec moteur longitudinal, adaptée à fournir un couple maximal de sortie de boîte d'environ 250 N.m.

Ce différentiel comporte trois corps coaxiaux mécaniquement indépendants en rotation, à savoir un corps central rotatif 1 et deux corps terminaux 2 et 3. Un premier composant hydrostatique 4 (adapté à fonctionner en moteur ou en pompe) est ménagé entre le corps central 1 et le corps 2 tandis qu'un deuxième composant hydrostatique 5 est ménagé entre le corps central 1 et l'autre corps 3. Les composants sont adaptes à débiter l'un dans l'autre.

Chacun des composants hydrostatiques 4 et 5 comporte une piste annulaire globalement transversale 6 ou 7 (toutes deux portées par le corps central dans l'exemple représenté) et un jeu de palettes 8 coulissant axialement dans des logement 9 ménagés en regard de la piste 6 ou 7 (dans les corps 2 ou 3 dans l'exemple considéré). Les palettes 8 sont appliquées axialement contre la piste en regard 6 ou 7 par des organes élastiques 10.

Ces pistes 6 et 7 sont formées d'une succession circonférentielle de plateaux transversaux 11, 12 en forme de secteurs, reliés par des zones de transition 13 inclinées par rapport à l'axe des corps coaxiaux. Les plateaux se répartissent en deux jeux alternés de plateaux décalés axialement, à savoir un jeu de plateaux en saillie 11 et un jeu de plateaux en retrait 12 formant, avec les zones de transition 13 situées de part et d'autre, des évidements 14 ou chambres de pression; la cylindrée de chaque composant dépend du nombre des évidements (ici il y en a deux, ce qui supprime les efforts radiaux), de leurs profondeurs et de leur dimension radiale.

De manière préférée les corps terminaux 2 et 3 sont disposés de part et d'autre du corps central rotatif 1. Dans une variante non représentée ces corps terminaux sont disposés de façon concentrique d'un même côté du corps "central".

Dans une autre variante non représentée les palettes des deux composants hydrostatiques sont attelées en rotation au corps central tandis que les pistes annulaires sont ménagées sur les corps terminaux.

Dans la suite du texte les corps terminaux de la figure 1 sont appelés porte-palettes.

De manière préférée l'un au moins des composants hydrostatiques a une cylindrée variable, grâce à la possibilité de faire varier la profondeur de l'un au moins des évidements.

Dans l'exemple représenté les deux composants hydrostatiques ont une cylindrée variable.

A cet effet, les plateaux (ou secteurs) en saillie 11 sont fixes par rapport au corps central 1 tandis que les plateaux (ou secteurs) en retrait 12 (12A ou 12B selon le composant considéré) formant les fonds des évidements 14 sont mobiles axialement. Ces plateaux 11 et 12 occupent la totalité de la dimension radiale (ou largeur L) de la piste annulaire 6 ou 7 (on dira dans la suite qu'ils sont pleins.

Pour assurer un guidage approprié des palettes entre ces plateaux, les zones de transition sont composites en ce sens, qu'elles comportent des ramp es inclinées 15 prolongeant circonférentiellement les plateaux en saillie 11, adaptées, quelque soit la cylindrée instantanée, à faire un relais avec des rampes mobiles 15 prolongeant circonférentiellement les plateaux mobiles.

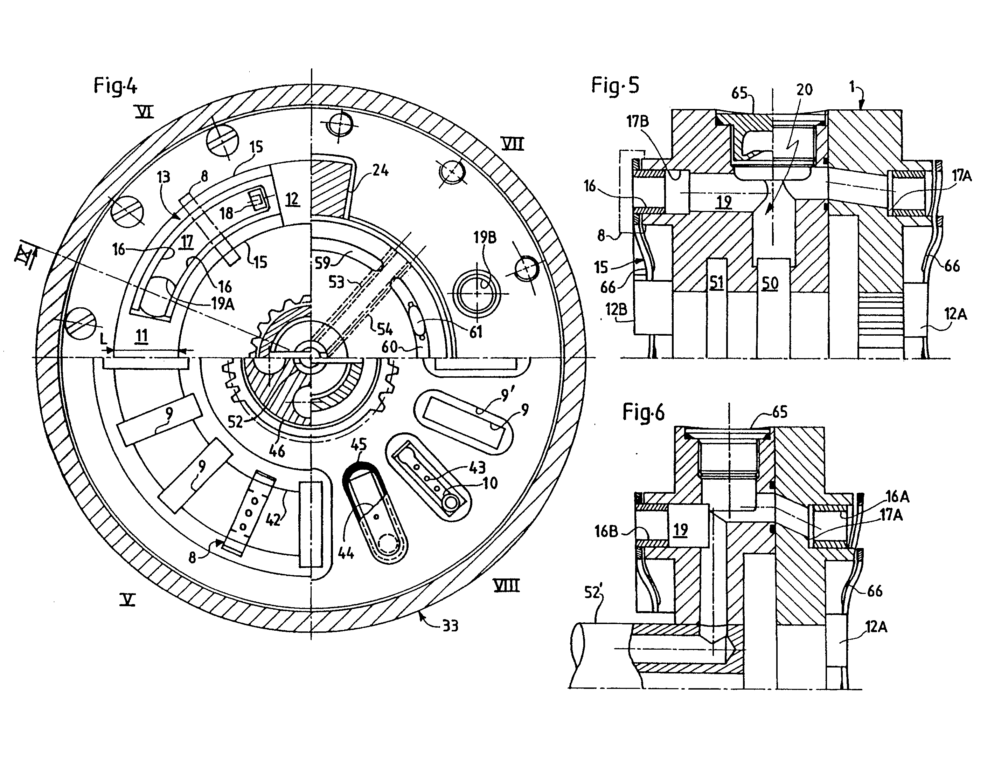

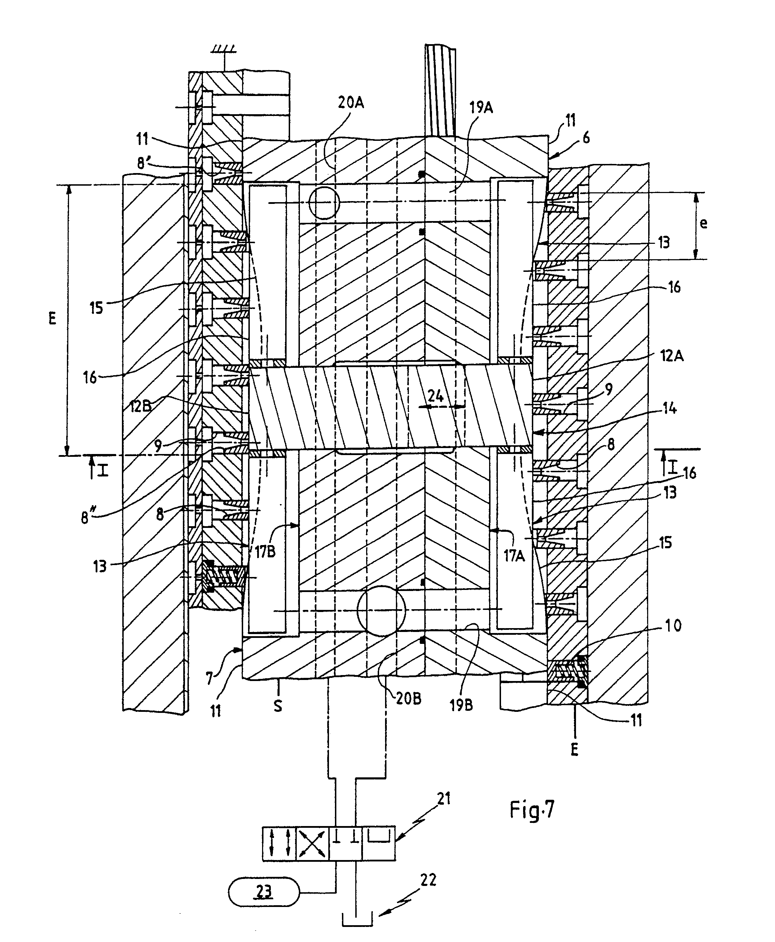

Ainsi qu'il ressort en particulier des figures 4 et 7, deux plateaux fixes 11 successifs sont séparés par une cavité allongée 17 (17A ou 17B selon le composant considéré) en forme de secteur, divisée en deux demi-cavités par un plateau mobile. Les rampes fixes inclinées 15 encadrent radialement les rampes mobiles 16 (qui sont, dans l'exemple considéré, transversales à l'axe commun de rotation). En fait ces rampes mobiles font partie de pièces en U courbe solidarisées aux plateaux mobiles 12 par des vis 18.

Dans chaque demi-cavité débouche un canal 19A ou 19B qui la relie hydrauliquement à un circuit hydraulique 20 interne au corps central 1;

chaque chambre 14 communique donc avec le circuit 20 par deux canaux 19 dont l'un assure une évacuation de fluide quand l'autre assure une alimentation en fluide, et vice-versa.

Il ressort en particulier de la figure 7 que des évidements 14A et 14B (ou des cavités 17A et 17B) axialement en regard et ménagés respectivement sur les pistes 6 et 7 débitent l'un dans l'autre par de tels canaux 19A et 19B du circuit 20. Ces canaux communiquement avec leurs homologues des autres évidements par des canaux 20A et 20B eux-mêmes reliés à l'extérieur à une vanne à 4 voies 21 qui permet de les maintenir en pression, de les mettre en circuit fermé (équilibre des pressions) ou les mettre en communication avec une source 22 ou avec un accumulateur 23.

De manière préférée, on établit une corrélation entre les variations de cylindrée d'évidements en regard sur les deux pistes de manière à commander ces cylindrées par ajustement d'un seul paramètre.

Dans l'exemple représenté les plateaux mobiles 12A et 12B de deux évidements en regard sont constitués par les tranches d'un barreau 24 mobiles axialement.

Ainsi qu'il ressort des figures 1 et 4 ce barreau 24 est servo-commandé en translation par un vérin rotatif 25 alimenté par un tiroir hydraulique de distribution 26.

Le corps central 1 est muni intérieurement de cannelures par lesquelles il est attelé en rotation à un tube cannelé 27 connecté à un arbre extérieur, ici un arbre de sortie. Autour de ce tube cannelé 27 est monté, indépendant en rotation, un tube 28 attelé en rotation, par des cannelures, au porte-palettes 2 et à un pignon 29 monté à l'extrémité d'un autre arbre extérieur, ici un arbre d'entrée. L'autre porte-palette 3 est attelé à une roue libre 30 par un arbre cannelé 31; à cette roue libre est associé un frein multidisque 32 (à commande 32A) destiné à intervenir lors du freinage ou d'une marche arrière.

Les deux porte-palettes 2 et 3 sont disposés dans une enveloppe 33 de confinement de fluide, formée d'une pièce cylindrique 34 et de deux flasques 35 et 36 dont le premier est solidaire en rotation du porte-palettes 2; cette envelope permet d'obtenir une reprise des efforts axiaux subis par les porte-palettes.

Une butée rotative 37 est prévue axialement entre le flasque 36 et le porte-palette 3 : elle peut être à rouleaux. Il s'agit ici d'une butée hydrostatique formée d'une simple couronne mince solidaire en rotation du porte-palette 3 et comportant en regard du flasque 36 des chambres 38 (dont le rôle apparaîtra plus loin) dont chacune communique hydrauliquement avec un logement 9 associé par un trou calibré 39 (principe du coussin d'huile) traversant cette couronne.

Les portes palettes 2 et 3 viennent en appui contre le corps central 1 par des lèvres annulaires d'étanchélité 40 et 41 disposées radialement à l'intérieur et à l'extérieur des pistes transversales 6 et 7.

Chacun des porte-palettes comporte un évidement torique 42 dans lequel pénètre axialement la piste 6 ou 7 du corps central.

Les palettes 8 ont une form en C selon les enseignements d'une demande parallèle de brevet déposée le même jour que la présente demande. Ces palettes glissent le long des pistes en étant appliquées axialement contre celles-ci et en étant en contact radialement de part et d'autre de ces pistes par les branches 8A : cela permet de réduire l'encombrement et la masse des palettes tout en maintenant une bonne étanchéité et un bon guidage. Les logements 9 des palettes se prolongent ainsi radialement de part et d'autre des évidements toriques 42. Les palettes comportent des perçages 43 destinés à permettre un transfert d'huile lors de leur escamotage et à réduire leur placage axial lors de leur travail en piston sur les plateaux 11 et 12.

Les logements 9 traversent axialement la totalité des porte-palettes (facilité d'usinage, par brochage par exemple) et débouchent, à l'opposé des pistes 6 et 7, dans des chambres 9' étanchées par des pièces 44 d'anti-extrusion munis de joints d'étanchéité 45 (voir figures 1 et 4-VIII). Ces chambres 9' ont globalement une surface (aire), transversalement à l'axe, légèrement supérieure à la surface qui est soumise également transversalement à l'axe à la pression du fluide au fonde de l'évidement torique 42 correspondant (l'aire de ces chambres 9' est en fait sous-estimée sur les dessins pour des raisons de lisibilité). Il en résulte un placage axial, sans déformation, de chaque porte-palettes 2 ou 3 contre le corps central, y compris en cas de haute pression locales. Les pièces d'antiextrusion 44 sont traversées par des canaux qui permettent d'alimenter via les canaux calibrés 39 les chambres 38 formant coussin d'huile (les chambres 9' et 38 sont ici en regard), les pressions sont ainsi transmises de proche en proche au flasque 36 dont la déformation a des conséquences bien moindres du point de vue fuites qu'une déformation équivalente du porte-palettes. La butée rotative 37 suit les déformations du flasque.

Le corps central est centré sur des raccords tournants constitués ici par un cylindre glacé 46 et les porte-palettes sont centrés sur ce corps central.

Pour obtenir une commande sans trop de pertes de charge (surtout à l'aspiration au freinage) du différentiel le cylindre 46 peut avoir différentes positions angulaires par rapport au carter général 47 du différentiel, en sorte de constituer un distributeur (ou vanne) rotatif.

Dans le cylindre 40 (ou arbre de distribution) sont ménagées deux paires de conduits 48 et 49 pouvant être à des pressions différentes. Ces conduits débouchent radialement par des encoches 48A ou 49A dans des chambres de communication 50 et 50 de liaison au circuit interne 20 pas les canaux 20A et 20B (voir figure 7).

Dans ce cylindre peut se déplacer axialement une tige 52 solidaire en rotation du corps central 1 par une goupille (non représentée) qui met en communication des canaux radiaux 53 et 54 du vérin 25 en communication avec de hautes ou basses pression selon les positions relatives de gorges hélicoïdales 55 et 56. 57 et 58, ménagées respectivement sur la tige 52 est sur un prolongement axial du vérin constituent le corps du distributeur. Les canaux radiaux 53 et 54 débouchent aux extrémités de chambres incurvées 59 et 60 ménagées dans le vérin 25 et dans lesquelles sont disposées des parois 61 de séparation solidaires du corps central 1 : une différence de pression dans les canaux 53 et 54 provoquent une rotation du vérin 25 par rapport au corps central 1 et donc, par effet vis-écrou localisé en 62, une translation des barreaux 24 et donc une variation simultanée des cylindrées des composants hydrostatiques 4 et 5, avec une somme qui reste toutefois constante.

Divers joints dynamiques 63 et statiques 64 sont prévus pour l'étanchéité de l'enveloppe 33.

Sur la figure 5 apparaît un bouchon 65 conçu pour piéger par centrifugation et turbulence des impuretés transitant dans le fluide. Les rampes inclinées 15 sont avantageusement recouvertes de lamelles ou r ampes élastiques 66 montées avec jeu pour établir une grande souplesse dans le contact des palettes sur les rampes lors du relayage des rampes 16 et 15. Dans cette figure 5 la cylindrée est nulle à gauche et maximale à droite.

Dans la variante de la figure 6 un arbre de sortie 52' est en ligne avec l'arbre d'entrée avec lequel le corps central est attelé en rotation, un raccord tournant étant prévu à l'extérieur, au-delà du frein et de la roue libre du porte-palettes 3.

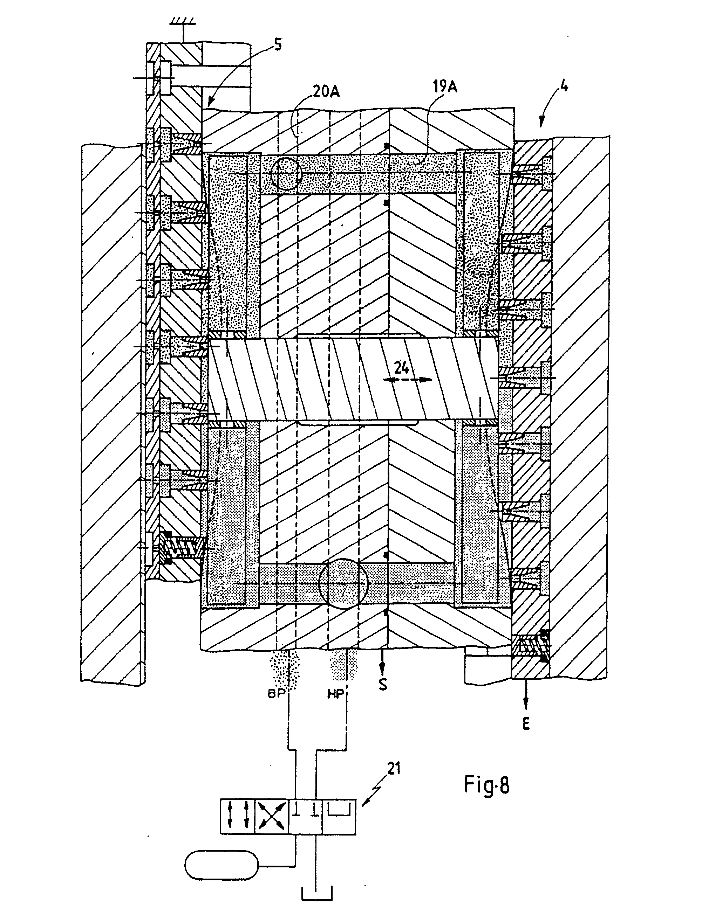

Une phase de fonctionnement du différentiel du point de vue hydraulique est représentée à la figure 8 et peut par exemple s'interpréter comme suit : le porte-palettes 2 tend à transmettre un couple au corps central 1 : le composant 4 agit en pompe qui débite dans le moteur 5 qui fournit ainsi un couple supplémentaire; il y a haute pression au bas de la figure et basse pression en haut de cette figure.

On appréciera sur les figures 7 et 8 que la longueur circonférentielle E (ou l'angle qui la soustend) d'un plateau (ici plateau mobile 12) et d'une zone de transition est un multiple de la période e (ou l'angle qui la sous-tend) avec laquelle les palettes sont distribuées angulairement (ici E = 4 e) grâce à quoi il y a synchronisme dans les configurations de palettes qui quittent ou arrivent sur des plateaux fixes et mobiles. Ainsi à la figure 7 la palette 8' arrive sur un plateau fixe 11 lorsque la palette 8" arrive sur un plateau mobile 12. Les plateaux fixes et mobiles peuvent toutefois correspondre à des multiples différents de e.

On appréciera à la figure 8 que les palettes sont placées en équipression avant de coulisser axialement en sorte de venir en saillie ou de s'escamoter tandis que leur position axiale est figée lorsqu'elles travaillent. Il y a ainsi dissociation dans le temps des phases de coulissement et de travail des palettes d'où de moindres frottements des palettes dans leurs logements et un meilleur rendement.

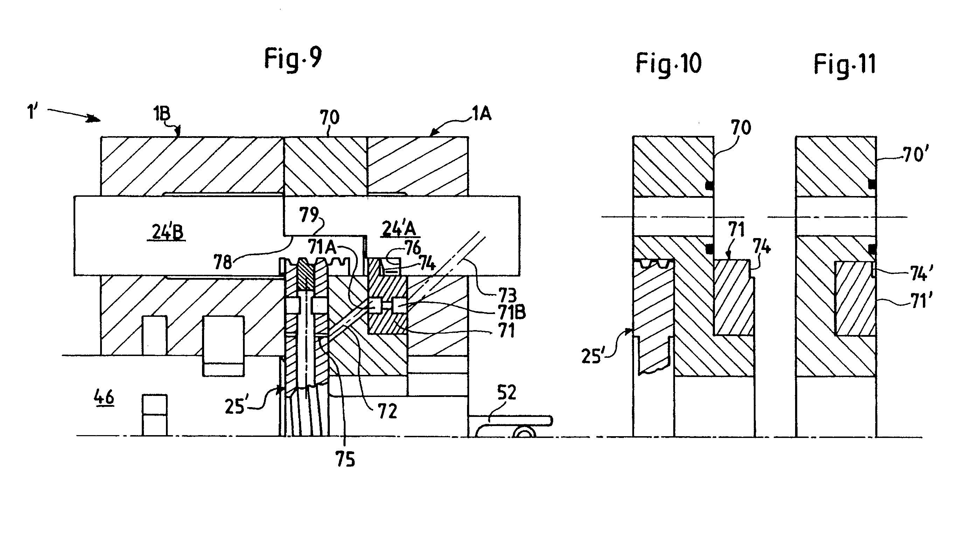

Sur la figure 9 est représentée une variante de structure du corps central, ici noté 1', qui comporte un barreau 24' formé de deux tronçcns 24'A et 24'B axialement dissociables.

Ce corps 1' comporte, entre deux parties 1A et 1B qui ont leurs équivalents sur la figure 1, un flasque intermédiaire 70 représenté dans un autre plan de coupe à la figure 10. Entre la partie 18 et ce flasque intermédiaire 70 est engagé un vérin rotatif 25' similaire à celui de la figure 1 à part que des canaux 75 y sont ménagés axialement. Dans le flasque 70 est monté un vérin rotatif annulaire 71 qui est équilibré, à double effet, et est adapté à être commandé en tout ou rien. Dans ce vérin sont ménagées deux chambres 71A et 71B en communication l'une avec l'autre et coopérant avec des cloisons solidaires du flasque 70 (non représentées). Ces chambres sont adaptées à être connectées hydrauliquement, d'un côté des cloisons avec un canal 75 du vérin 25' par un canal 72, et de l'autre côté de ces cloisons avec un zone du composant hydrostatique 4 adaptée à être à haute pression en cas de freinage, par un canal schématisé en 73.

Le vérin 70 est en prise avec le tronçon 24'B du barreau, de la manière précitée, tandis que le vérin 71 est en prise avec le tronçon 24'A par l'intermédiaire d'une rampe ondulée 74 coopérant avec une rampe ondulée complémentaire 76 ménagée sur le tronçon 24'A. Cette rampe est de profondeur axiale variable, minimale sur la figure 10 et maximale sur la figure 9.

Les deux tronçons 24'A et 24'B restent en permanence en contact par des surfaces 78 et 79 parallèles à l'axe.

En cas de freinage les chambres du vérin 71 sont mises on communication hydraulique, par le conduit 73, avec une zone à haute pression, ce qui agit sur les cloisons solidaires du flasque 70 en sorte de faire tourner le vérin 71 jusqu'à pousser au maximum vers la droite le tronçon 24'A : la cylindrée du composant 4 devient ainsi nulle tout en permettant une translation du tronçon 24'B. Le

maintien de cette cylindrée à une valeur nulle se révèle faciliter la récupération d'énergie au freinage.

Par contre ces chambres du vérin 71 sont, de l'autre côté des cloisons, alimentées en haute pression en fin de course du vérin principal 25', par l'intermédiaire des canaux 75 et 72, ce qui provoque la libération axiale du tronçon 24'A qui se trouve appliqué contre le tronçon 24'B. Ces tronçons se comportent conjointement, dans ce cas, comme le barreau monobloc 24 de la figure 1.

La figure 11 montre une variante de ce flasque 70 adaptée à être interposée entre les deux parties du corps central de la figure 6. Le vérin supplémentaire 71' muni de sa rampe 74' y est quasi-complètement englobé.

Il va de soi que la description qui précède n'a été proposée qu'à titre d'exemple non limitatif et que de nombreuses variantes peuvent être proposées par l'homme de l'art sans sortir du cadre de l'invention.

Ainsi par exemple il est possible de concevoir un différentiel totalement symétrique en collant dos à dos deux différentiels précédemment décrits : les roues libres sont dans ce cas placées au centre avec leurs freins bloqués sur le cylindre : il n'y a plus de butée rotative.

Dans un différentiel selon l'invention la température du fluide (huile) a tendance à s'autoréguler.

Sur un véhicule la boîte précédemment décrite est en mode synchrone la majeure partie du temps ce qui améliore la durée de vie en ce qui concerne les palettes escamotables et donne un rendement très bon.

On peut prévoir une grande variété d'échanges d'énergie avec l'extérieur. Ainsi, par exemple, on peut aménager le dispositif de la figure 1 en sorte que le corps terminal 3 soit, par l'intermédiaire de la roue libre et du frein, relié à un autre arbre extérieur. On peut aussi envisager des échanges purement hydrauliques avec un autre type de source d'énergie telle que motopompe électrique par exemple.

## Revendications

1. Différentiel hydrostatique comportant au moins trois corps coaxiaux mécaniquement indépendants en rotation dont au moins un corps rotatif intermédiaire (1) destiné à être relié à un arbre extérieur et au moins deux corps terminaux (2, 3), et deux composants hydrostatiques (4, 5) à palettes (6) disposés respectivement aux interfaces du corps rotatif intermédiaire et de l'un et l'autre des corps terminaux et adaptés a débiter l'un dans l'autre au travers du corps rotatif intermédiaire, chaque composant hydrostatique (4, 5) comportant des palettes (8) coulissant axialement dans des logements (9) de l'un des corps terminaux et appliqués axialement (10) contre une piste annulaire de guidage globalement transversale (6, 7) ménagée dans le corps rotatif intermédiaire et présentant, parallèlement a l'axe de rotation, une succession annulaire d'évidements (14) formant chambre de travail pour les palettes, caractérisé en ce que ce corps rotatif intermédiare (1) porte les pistes (6, 7) sur des tranches opposées tandis que les deux corps terminaux, dans lesquels coulissent les palettes, sont disposés axialement de part et d'autre de ce corps rotatif, en étant retenus axialement contre ce corps rotatif par un carter étanche (33) comportant deux flasques (35, 36) disposés axialement de part et d'autre des trois corps, dont l'un est solidaire de l'un des corps terminaux et l'autre est séparé de l'autre corps terminal par une butée rotative (37).

2. Différentiel hydrostatique selon la revendication 1, caractérisé en ce que la butée rotative (37) est fluidique et est constituée d'un anneau mince comportant, du côté du flasque voisin (36), des chambres formant coussin d'huile (38) mises par un trou calibré (39) en communication avec des logements (9) recevant les palettes.

3. Différentiel hydrostatique selon la revendication 1 ou la revendication 2, caractérisé en ce que des évidements (14) des deux composants hydrostatiques sont de profondeur variable.

4. Différentiel hydrostatique selon la revendication 3, caractérisé en ce que les pistes annulaires transversales (6, 7) comportant une série annulaire de plateaux pleins fixes (11) solidaires du corps intermédiaire (1) alternant angulairement avec une série annulaire de plateaux pleins (12) mobiles axialement, des zones de transition (13) entre ces secteurs assurant un relais des palettes entre ces plateaux, et étant munis de canaux (19) de circulation de fluide, ces zones de transition comportant des rampes inclinées (15) prolongeant circonférentiellement les plateaux fixes de part et d'autre d'une cavité (17) et, radialement entre ces rampes inclinées, des rampes mobiles (16) prolongeant circonférentiellement les plateaux mobiles.

5. Différentiel hydrostatique selon la revendication 4, caractérisé en ce que les évidements des deux pistes annulaires sont axialement en regard, les plateaux mobiles de deux évidements en regard étant formés par un barreau (24) mobile axialement en translation.

6. Différentiel hydrostatique selon la revendication 5, caractérisé en ce que ce barreau (24) est servo-commandé en translation, par liaison vis-écrou, par un vérin à double effet et à corps rotatif équilibré (25) monté dans le corps central, comportant des cloisons (61) fixes par rapport au corps intermédiaire (1), alimenté par un tiroir de distribution (26) à gorge hélicoïdale solidaire en rotation du corps central commandé par une tige de commande (52) et disposée suivant l'axe de rotation.

7. Différentiel hydrostatique selon la revendication 5, caractérisé en ce que ce barreau (24') est formé de deux tronçons axialement dissociables, dont un premier tronçon (24'B) qui est commandé en translation, par liaison vis-écrou, par un premier vérin à double effet et à corps rotatif équilibré monté dans le corps central comportant des cloisons fixes par rapport au corps intermédiaire (1), alimenté par un tiroir de distribution (26) commandé par une tige de commande (52) solidaire en rotation du corps intermédiaire, et un second tronçon (24'A) qui est commandé en translation par un second vérin rotatif (71) annulaire, équilibré, à double effet, commandé en tout ou rien, adapté soit à laisser ce second tronçon appliqué axialement contre le premier tronçon, soit à le maintenir dans une configuration fixe par rapport au corps intermédiaire.

8. Différentiel hydrostatique selon l'une quelconque des revendications 4 à 7, caractérisé en ce que le corps intermédiaire (1) comporte des rampes élastiques (66) longeant avec jeu axial les rampes inclinées (16).

9. Différentiel hydrostatique selon l'une quelconque des revendications 4 à 8, caractérisé en ce qu'un plateau plein (11, 12) et une zone de transition associée (13) s'étendent angulairement sur un angle (E) multiple de la période angulaire (e) avec laquelle sont distribuées angulairement les palettes.

10. Différentiel hydrostatique selon l'une quelconque des revendications 1 à 9, caractérisé en ce que le corps intermédiaire est relié hydrauliquement à une portion fixe de circuit par un raccord tournant (48A, 49A, 50, 51) ménagé entre ce corps intermédiaire et un axe de distribution (46) sur lequel ce dernier est centré.

11. Différentiel hydrostatique selon l'une quelconque des revendications 1 à 10, caractérisé en ce que des bouchons (65) sont prévus à la périphérie radiale du corps intermédiaire pour recevoir des impuretés du fluide drainées par centrifugation dans des conduits internes à ce corps.

12. Différentiel hydrostatique selon l'une quelconque des revendications 1 à 11, caractérisé en ce qu'un accumulateur extérieur (23) est adapté à être connecté au circuit hydraulique interne au corps intermédiaire.

13. Boîte de vitesse hydrostatique comportant un differentiel hydrostatique selon l'une quelconque des revendications 1 à 12, le corps intermédiaire (1) et l'un (2) des corps terminaux étant reliés à des arbres extérieurs.

14. Boîte de vitesse selon la revendication 13, caractérisée en ce que l'autre corps terminal (3) est relié à une roue libre (30) à laquelle est associé un frein (32) tandis que le corps intermédiaire (1) est relié à un arbre de sortie.

15. Boîte de vitesse selon la revendication 13, caractérisée en ce que par l'intermédiaire de la roue libre et du frein, l'autre corps terminal (3) est lié en rotation à un arbre extérieur.

**Claims**

1. A hydrostatic differential comprising at least three coaxial elements which are mechanically independent in rotation, consisting of at least one intermediate rotatable element (1) adapted to be connected to an external shaft and at least two end elements (2, 3), and two hydrostatic components (4, 5) comprising pallets (8), disposed respectively at the interfaces between the intermediate rotatable element and each of the end elements and adapted to supply fluid from one into the other through the intermediate rotatable element, each hydrostatic component (4, 5) comprising pallets (8) which slide axially in housings (9) of one of the end elements and are applied axially (10) against a generally transverse annular guiding track (6, 7) formed in the intermediate rotatable element and comprising, parallel to the axis of rotation, an annular succession of recesses (14) forming working chambers for the pallets, characterized in that the intermediate rotatable element (1) comprises the tracks (6, 7) on opposite edges, whilst the two end elements, in which the pallets slide, are disposed axially on either side of this rotatable element, being held axially against the rotatable element by a sealed casing (33) comprising two flanges (35, 36) disposed axially on either side of the three elements, one of which flanges is fixed to one of the end elements and the other of which is separated from the other end element by a rotatable stop (37).

2. A hydrostatic differential according to claim 1, characterized in that the rotatable stop (37) is fluid and is constituted by a thin ring comprising, on the side towards the adjacent flange (36), chambers forming a cushion of oil (38) which are put in communication by means of a calibrated hole (39) with housings (9) receiving the pallets (8).

3. A hydrostatic differential according to claim 1 or claim 2, characterized in that the recesses 14 in the two hydrostatic components have variable depths.

4. A hydrostatic differential according to claim 3, characterized in that the transverse annular tracks (6, 7) comprise an annular series of fixed solid plates (11) fastened to the intermediate element (1) and alternating angularly with an annular series of axially movable solid plates (12), transition regions (13) between these sectors providing change over regions for the pallets between these plates and being provided with fluid circulation channels (19), these transition regions comprising inclined ramps (15) forming circumferential extensions of the fixed plates on either side of a cavity (17) and movable ramps (16), located radially between these inclined ramps, forming circumferential extensions of the movable plates.

5. A hydrostatic differential according to claim 4, characterized in that the recesses in the two annular tracks face one another axially, the movable plates of two facing recesses being formed by a bar (24) which is movable axially in translation.

6. A hydrostatic differential according to claim 5, characterized in that the bar (24) is servo-controlled in translation, through a nut and screw type of connection, by means of a double-action jack comprising an equilibrated rotatable element (25) mounted in the central element, comprising partitions (61) which are fixed in relation to the intermediate element (1), and is supplied by a distribution slide valve (26) comprising a helicoidal groove, which is fixed in rotation to the central element and is controlled by a control rod (52), and is disposed on the axis of rotation.

7. A hydrostatic differential according to claim 5, characterized in that the bar (24') is formed by two axially dissociable sections, the first of which sections (24'B) is controlled in translation, through a nut and screw type of connection, by means of a first double-action jack comprising an equilibrated rotatable element mounted in the central element, comprising partitions which are fixed in relation to the intermediate element (1), and is supplied by a distribution slide valve (26) controlled by a control rod (52) which is fixed in rotation to the intermediate element (1), and the second of which sections (24'A) is controlled in translation by a second rotatable, annular, equilibrated, double-action jack (71), controlled in an all or nothing manner, and adapted either to leave this second section applied axially against the first section, or to maintain it in a fixed configuration relative to the intermediate element.

8. A hydrostatic differential according to any one of claims 4 to 7, characterized in that the intermediate element (1) comprises resilient ramps (66) extending with an axial play along the inclined ramps (16).

9. A hydrostatic differential according to any one of claims 4 to 8, characterized in that a solid plate (11, 12) and an associated transition region (13) extend angularly over an angle (E) which is a multiple of the angular interval (e) at which the pallets are angularly distributed.

10. A hydrostatic differential according to any one of claims 1 to 9, characterized in that the intermediate element is connected hydraulically to a fixed portion of the circuit by means of a rotatable connection (48A, 49A, 50, 51) formed between the intermediate element and a distribution shaft (46) on which the latter is centred.

11. A hydrostatic differential according to any one of claims 1 to 10, characterized in that caps (65) are provided at the radial periphery of the intermediate element to receive contaminants of the fluid which are removed by centrifugation in the channels inside this element.

12. A hydrostatic differential according to any one of claims 1 to 11, characterized in that an external reservoir (23) is adapted to be connected to the hydraulic circuit inside the intermediate element.

13. A hydrostatic gearbox comprising a hydrostatic differential in accordance with any one of claims 1 to 12, the intermediate element (1) and one (2) of the end elements being connected to external shafts.

14. A gearbox according to claim 13, characterized in that the other end element (3) is connected to a free wheel (30) with which a brake (32) is associated, whilst the intermediate element (1) is connected to an output shaft.

15. A gearbox according to claim 13, characterized in that through the intermediary of the free wheel and the brake, the other end element (3) is connected in rotation to an external shaft.

## Ansprüche

1. Hydrostatisches Differential mit zumindest drei koaxialen, mechanisch unabhängig voneinander drehbaren Körpern, von denen wenigstens ein Zwischen-Drehkörper (1) dazu bestimmt ist, mit einer äußeren Welle und zumindest zwei Endkörpern (2, 3) verbunden zu werden, und mit zwei hydrostatischen Bauelementen (4, 5) mit Paletten (8), die jeweils an Grenzflächen des Zwischen-Drehkörpers und der beiden Endkörper angeordnet und geeignet sind, Fluid vom einen durch den Zwischen-Drehkörper hindurch zum anderen zu liefern, wobei jedes hydrostatische Bauelement (4, 5) Paletten (8) umfaßt, die in Aufnahmen (9) eines der Endkörper axial gleiten und axial (10) gegen eine ringförmige, allgemein querverlaufende Führungsbahn (6, 7) gehalten sind, die am Zwischen-Drehkörper ausgebildet ist und parallel zur Drehachse eine ringförmige Folge von Ausnehmungen (14) aufweist, die eine Arbeitskammer für die Paletten bilden, dadurch **gekennzeichnet,** daß der Zwischen-Drehkörper (1) die Bahnen (6, 7) auf entgegengesetzten Randflächen trägt, während die beiden Endkörper, in denen die Paletten gleiten, axial beiderseits des Drehkörpers angeordnet und durch ein dichtes Gehäuse (33) axial gegen diesen Drehkörper gehalten sind, welches zwei Flansche (35, 36) umfaßt, die axial beiderseits der drei Körper angeordnet sind und von denen der eine fest mit einem der Endkörper verbunden und der andere durch einen Drehanschlag (37) vom anderen Endkörper getrennt ist.

2. Hydrostatisches Differential nach Anspruch 1, dadurch **gekennzeichnet,** daß es sich bei dem Drehanschlag (37) um einen Fluidik-Drehanschlag handelt, der aus einem dünnen Ring gebildet ist, der auf der Seite des benachbarten Flansches (36) ein Ölkissen bildende Kammern (38) umfaßt, die durch eine kalibrierte Öffnung (39) mit den Aufnahmen (9) für die Paletten in Verbindung gesetzt sind.

3. Hydrostatisches Differential nach Anspruch 1 oder 2, dadurch **gekennzeichnet,** daß die Ausnehmungen (14) der beiden hydrostatischen Bauelemente eine variable Tiefe aufweisen.

4. Hydrostatisches Differential nach Anspruch 3, dadurch **gekennzeichnet,** daß die ringförmigen, querverlaufenden Bahnen (6, 7) eine ringförmige Folge von feststehenden, massiven Platten (11) umfassen, die fest mit dem Zwischenkörper (1) verbunden sind und winkelmäßig mit einer ringförmigen Folge von axial beweglichen, massiven Platten (12) abwechseln, Übergangszonen (13) zwischen den Sektoren, die ein Paletten-Relais zwischen den Platten sicherstellen und mit Fluidzirkulations-Kanälen (19) versehen sind, wobei die Übergangszonen geneigte Rampen (15) umfassen, die die feststehenden Platten in Umfangsrichtung beiderseits einer Vertiefung (17) verlängern, sowie radial zwischen den geneigten Rampen angeordnete bewegliche Rampen (16), die die beweglichen Platten in Umfangsrichtung verlängern.

5. Hydrostatisches Differential nach Anspruch 4, dadurch **gekennzeichnet,** daß die Ausnehmungen der beiden ringförmigen Bahnen sich axial gegenüberstehen, und daß die beweglichen Platten der beiden sich einander gegenüberstehenden Ausnehmungen durch einen axial translatorisch bewegbaren Stab (24) gebildet sind.

6. Hydrostatisches Differential nach Anspruch 5, dadurch **gekennzeichnet,** daß der Stab (24) translatorisch servogesteuert ist, und zwar durch eine Schrauben-Mutter-Verbindung, ein doppelt wirkendes Stellglied (25) mit einem ausgeglichenen Drehkörper, das am Zentralkörper vorgesehen ist, bezüglich des Zwischenkörpers (1) feststehende Trennwände (61) umfaßt und mit einem eine spiralförmige Auskehlung aufweisenden Steuerschieber (26) versehen ist, der drehfest mit dem Zentralkörper verbunden ist, der durch eine Steuerstange (52) gesteuert und der Drehachse folgend angeordnet ist.

7. Hydrostatisches Differential nach Anspruch 5, dadurch **gekennzeichnet**, daß der Stab (24') durch zwei axial trennbare Abschnitte gebildet ist, von denen ein erster Abschnitt (24'B) translatorisch gesteuert ist durch eine Schrauben-Mutter-Verbindung, ein erstes, doppelt wirkendes Stellglied mit einem ausgeglichenen Drehkörper, das am Zentralkörper vorgesehen ist, bezüglich des Zwischenkörpers (1) feststehende Trennwände aufweist, mit einem Steuerschieber (26) versehen ist, der durch eine drehfest mit dem Zwischenkörper verbundene Steuerstange (52) gesteuert ist, und ein zweiter Abschnitt (24'A) translatorisch gesteuert ist durch ein zweites drehbares, ringförmiges, ausgeglichenes, doppelt wirkendes und vollständig offen oder zu gesteuertes Stellglied, das dafür geeignet ist, den zweiten Abschnitt entweder axial gegen den ersten Abschnitt zu halten, oder in einer bezüglich des Zwischenkörpers feststehenden Anordnung aufrechtzuerhalten.

8. Hydrostatisches Differential nach einem der Ansprüche 4 bis 7, dadurch **gekennzeichnet**, daß der Zwischenkörper (1) elastische Rampen (66) umfaßt, die mit axialem Spiel entlang der geneigten Rampen (16) verlaufen.

9. Hydrostatisches Differential nach einem der Ansprüche 4 bis 8, dadurch **gekennzeichnet**, daß sich eine massive Platte (11, 12) und eine zugeordnete Übergangszone (13) winkelmäßig über einen Winkel (E) erstrecken, der ein Vielfaches des Winkelabschnitts (e) beträgt, mit dem die Paletten winkelmäßig verteilt sind.

10. Hydrostatisches Differential nach einem der Ansprüche 1 bis 9, dadurch **gekennzeichnet**, daß der Zwischenkörper hydraulisch mit einem feststehenden Abschnitt des Kreises durch eine Drehverbindung (48A, 49A, 50, 51) verbunden ist, die zwischen diesem Zwischenkörper und einer Verteilungsachse (46) ausgebildet ist, auf der der letztere zentriert ist.

11. Hydrostatisches Differential nach einem der Ansprüche 1 bis 10, dadurch **gekennzeichnet**, daß an der radialen Peripherie des Zwischenkörpers Verschlußelemente (65) vorgesehen sind, um Verunreinigungen des durch Zentrifugieren in den inneren Leitungen von diesem Körper abgezogenen Fluids aufzunehmen.

12. Hydrostatisches Differential nach einem der Ansprüche 1 bis 11, dadurch **gekennzeichnet**, daß ein äußeres Sammelorgan (23) ausgelegt ist, mit dem Hydraulikkreis innerhalb des Zwischenkörpers verbunden zu werden.

13. Hydrostatisches Getriebegehäuse mit einem hydrostatischen Differential nach einem der Ansprüche 1 bis 12, bei dem der Zwischenkörper (1) und einer (2) der Endkörper mit äußeren Wellen verbunden sind.

14. Getriebegehäuse nach Anspruch 13, dadurch **gekennzeichnet**, daß der andere Endkörper (3) mit einem Freilauf (30) verbunden ist, dem eine Bremse (32) zugeordnet ist, während der Zwischenkörper (1) mit einer Abtriebswelle verbunden ist.

15. Getriebegehäuse nach Anspruch 13, dadurch **gekennzeichnet**, daß durch den Freilauf und die Bremse der andere Endkörper (3) mit einer äußeren Welle drehfest verbunden ist.

Fig.1

Fig.2

Fig.3

Fig·5

Fig·6

Fig·4

Fig.7

Fig·8

Fig.11

Fig.10

Fig.9